# EUROPEAN PATENT SPECIFICATION

(11) **EP 1 950 826 B1**
(45) Date of publication and mention of the grant of the patent: **09.06.2010**
(21) Application number: 08001247.9
(22) Date of filing: 23.01.2008
(51) Int. Cl.: H01M 8/10, H01M 8/02, H01M 4/86

(54) **Gas diffusion electrode substrate, gas diffusion electrode and process for its production, and fuel cell**
Gasdiffusionselektrodensubstrat, Gasdiffusionselektrode und Herstellungsverfahren dafür sowie Brennstoffzelle
Substrat d'électrode de diffusion de gaz, électrode de diffusion de gaz et son procédé de production, et pile à combustible

(30) Priority: 23.01.2007 JP 2007012096
(43) Date of publication of application: 30.07.2008
(73) Proprietor: JAPAN VILENE COMPANY, LTD., Tokyo 101-8614 (JP)
(72) Inventor: Kimura, Koji, Koga-shi Ibaraki 306-0213 (JP); Ito, Tatsunori, Koga-shi Ibaraki 306-0213 (JP)
(74) Representative: Grünecker, Kinkeldey, Stockmair & Schwanhäusser Anwaltssozietät

(56) References cited:
- EP-A- 0 872 907
- EP-A- 1 727 225
- WO-A-2006/100877
- US-A- 5 300 165
- US-A1- 2004 058 123

## Description

### Field of the Invention

The present invention relates to a fuel cell gas diffusion electrode substrate, to a fuel cell gas diffusion electrode and a process for its production and to a fuel cell, and particularly it relates to a fuel cell gas diffusion electrode employing an inexpensive glass nonwoven fabric as the substrate, and to a fuel cell incorporating the same.

In the rest of the following description the terms "gas diffusion electrode" and "gas diffusion electrode substrate" are to be understood as "fuel cell gas diffusion electrode" and "fuel cell gas diffusion electrode substrate".

### Related Background Art

With the continuing depletion of world petroleum reserves, the situation of dwindling resources and the search for alternative fuels as energy sources for various purposes have become major issues. Fuel cells that dispense electric power by converting fuels to chemical energy continue to undergo rapid development.

Fuel cells are divided into the four categories of phosphoric acid fuel cells (PAFC), molten carbonate fuel cells (MCFC), solid oxide fuel cells (SOFC) and polymer electrolyte fuel cells (PEFC), according to the type of electrolyte used, as explained, for example, on p.5 of "Research on Technological Trends in Fuel Cells" (edited by the Patent Office Technology Research Division, May 31, 2001 (<url>http://www.jpo.go.jp/shiryou/index.htm)). These types of fuel cells are restricted in their operating temperature ranges depending on the electrolyte used, to operation in a low temperature range of no higher than 100°C for PEFC, in a moderate temperature range of 180-210°C for PAFC, in a range of 600°C and higher for MCFC and in a high-temperature range of near 1000°C for SOFC. Ordinary PEFCs that are capable of output in a low temperature range dispense electric power resulting from chemical reaction between hydrogen gas and oxygen gas (or air) as fuels, and their development is being hastened because they can efficiently produce electric power with a relatively small device design.

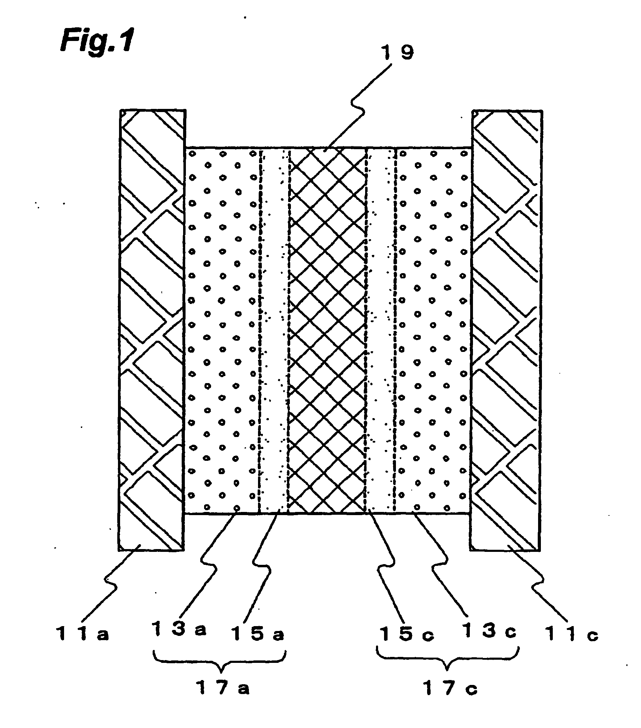

Fig. 1 is a cross-sectional schematic view showing the main parts of a fuel cell, for illustration of the basic structure of a conventional PEFC. In this drawing, the same hatching is used to indicate structural components made of materials having essentially the same structure or function. As shown in Fig. 1, the basic structure of the PEFC comprises bipolar plates 11a, 11c and an electrolyte membrane 19 sandwiched between an anode collector 17a and cathode collector 17c, constructed by laminating gas diffusion electrodes 13a, 13c and catalyst layers 15a, 15c, respectively, that dispense produced electromotive force. The bipolar plates 11a or 11c have a construction that supplies or removes the gas, and the gas diffusion electrodes 13a, 13c deliver the gas supplied from the plates in an even manner across the entire surfaces corresponding to the interfaces with the catalyst layers 15a, 15c. The gas that has permeated into the collectors 17a and 17c chemically combines primarily near the catalyst layer 15c of the cathode, and electromotive force is produced by electrons separated from protons at the catalyst layer 15a of the anode. In order to avoid hindering continuous transfer of protons that are generated in the cell, moisture is required in both catalyst layers 15a, 15c and the electrolyte membrane 19, where ion exchange occurs. Thus, external humidification is necessary when the moisture is insufficient with only the water produced at the cathode collector 17c. In the fuel cell construction described above, the structure excepted both bipolar plates 11a and 11c, i.e. the assembly of the electrolyte membrane 19, catalyst layers 15a and 15c and gas diffusion electrodes 13a and 13c, is known as an MEA (Membrane Electrode Assembly).

The MEA structure may be any that allows the protons or electrons generated at the catalyst layer 15a on the anode to transfer inward while permitting the fuel gas or emitted gas (containing moisture) to be supplied or removed at the surface of the gas diffusion electrode side of the MEA. Various methods may therefore be employed for preparation of the MEA. For example, a method is known wherein the electrolyte membrane 19 at the center of the laminated structure of the fuel cell is composed of a sulfonated fluorine-based polymer membrane such as "Nafion" (trade name of U.S. DuPont Corp.), with a catalyst paste consisting of a dispersion comprising carbon particles supporting a catalyst such as platinum, and the aforementioned sulfonated fluorine-based polymer, coated and dried on both sides of the membrane 19 to integrally form the catalyst layers 15a, 15c with the electrolyte membrane 19, and this is laminated with separately prepared gas diffusion electrodes 13a, 13c obtained by coating a conductive paste composed of carbon or a binder resin (described hereunder) in the form of particles. A different method employs lamination with only the aforementioned sulfonated fluorine-based polymer membrane as the electrolyte membrane 19, with the catalyst paste mentioned above coated on one surface of each of the gas diffusion electrodes 13a, 13c. In order to illustrate these different methods comprehensively in Fig. 1, the bonding surfaces of the electrolyte membrane 19 and the catalyst layers 15a, 15c and the bonding surfaces of the gas diffusion electrodes 13a, 13c and catalyst layers 15a, 15c are indicated by broken lines.

There is no limitation to such solid electrolyte forms, and as a different technology for fuel cells, Japanese Unexamined Patent Publication HEI No. 10-289723 (hereinafter referred to as "Patent document 1") discloses a construction wherein the cathode collector and/or the anode collector has moisture transferring means that transfers moisture from the bonding surface (interface) with the contacting electrode toward the back side of the collector. This prior art publication discloses a construction wherein each collector with moisture transferring means has the pores of the porous substrate filled with a water-repellent filler and a filler that is more hydrophilic than the water-repellent filler, and the moisture transferring means is formed of the hydrophilic filler. It is stated that the porous substrate referred to in this prior art is selected from the group consisting of carbon fibers, metal fibers, glass fibers and plastic fibers, the water-repellent filler is a fluorine polymer selected from the group consisting of polytetrafluoroethylene, perfluorocarbonsulfonic acid, tetrafluoroethylene-perfluoroalkylvinyl ether copolymer, tetrafluoroethylene-hexafluoropolypropylene copolymer, polychlorotrifluoroethylene, polyvinylidene fluoride, polyvinyl fluoride and tetrafluoroethylene-ethylene copolymer, and the hydrophilic filler is selected from the group consisting of carbon powder, metal powder, glass powder, silica gel powder and zeolite powder.

The technology described in Patent document 1 suggests that, for the "collector scaffold", the components corresponding to the gas diffusion electrodes in Fig. 1 mentioned above are formed using the two different fillers referred to above, and that the porous substrate may be composed of carbon fiber-formed carbon paper or of glass fiber and plastic fiber, and it is disclosed that the catalyst layer has a construction with a catalyst paste integrally formed by coating on an electrolyte membrane. It is further disclosed that employing such a construction provides a function and effect whereby condensation moisture or reaction product moisture generated inside the fuel cell transfers into the collectors by capillary action from the interface between each collector (corresponding to each gas diffusion electrode by itself and especially the cathode collector) and electrode (corresponding to the catalyst layer) (see Fig. 2 of Patent document 1). This publication therefore discloses that the cell is capable of stable electric power generation by unhindered supply of reactive gas and remove of product water in the cell.

Japanese Unexamined Patent Publication No. 2004-281363 (hereinafter referred to as "Patent document 2") proposes a gas diffusion electrode for a polymer electrolyte fuel cell, a process for its production and a polymer electrolyte fuel cell employing it, the gas diffusion electrode for the polymer electrolyte fuel cell being characterized by formation of a conductive porous layer containing a polyvinylidene fluoride compound and carbon black on at least one side of a porous fiber sheet as the substrate. According to this prior art, using a porous fiber sheet to form the gas diffusion electrode results in undesirable penetration of the electrolyte membrane (with the integrally formed catalyst layer) due to protruding fibers.

Patent document 2 discloses modes wherein the porous fiber sheet is made of carbon paper, carbon cloth, a plastic fiber sheet, a metal fiber sheet or an inorganic fiber sheet. As preferred modes it is stated that the "plastic fiber sheet" is preferably a fluorine polymer, polyester, polyolefin, polyamide, polyimide or polybenzoxide, while the metal fiber sheet is preferably stainless steel and the inorganic fiber sheet is preferably glass, carbon or ceramic.

According to this prior art, the fuel cell comprises the gas diffusion electrode for a polymer electrolyte fuel cell, a catalyst layer, polymer electrolyte membrane and separator, wherein the gas diffusion electrode has the conductive porous layer containing a polyvinylidene fluoride compound and carbon black formed on at least one side of the porous sheet or the polypolyvinylidene fluoride compound and carbon black are included inside the porous fiber sheet.

Similarly, Japanese Patent Public Inspection No. 2001-514785 (hereinafter referred to as "Patent document 3") discloses a "porous electrode substrate for a fuel cell wherein a nonwoven fabric glass fiber mat comprises a conductive filler", and the glass fiber mat is one that contains a polyvinyl alcohol binder (claim 1, claim 14 and Example 2 of Patent document 3). In addition, Japanese Patent Public Inspection No. 2000-513480 (hereinafter referred to as "Patent document 4") discloses "a gas diffusion electrode containing a gas diffusion layer, wherein the gas diffusion layer comprises a glass fiber nonwoven fabric impregnated with at least one type of conductive substance with a bulk conductivity of 10 mS/cm or greater (claims 1-3 and Example 4 of Patent document 4).

WO 2006/100877 discloses a carbon fiber conjugate, a composite material using the same and a fuel cell using the composite material.

### SUMMARY OF THE INVENTION

The various constructions mentioned above have been disclosed as fuel cells, but the substrate used for the gas diffusion electrode is usually one composed of carbon fibers that have been graphitized at a high temperature of 1000°C or above. The graphitizing step introduces increased production cost, and because the inferior physical strength of the graphitized carbon paper renders the carbon fibers susceptible to damage during the paste adhering step for the catalyst layer formation, this technical issue remains as an obstacle against the general use of fuel cells. Attempts are also being made to use essentially non-conductive materials, including glass nonwoven fabrics that are well known in the field of electrical materials, but these have not yet been studied in detail as substrates for gas diffusion electrodes in fuel cells, and numerous problems still remain to be solved before an inexpensive fuel cell can be realized.

The present inventors have completed this invention as a result of examining the functions of the aforementioned glass nonwoven fabrics, and particularly the binder compositions of glass nonwoven fabrics used as base layers for adhesion of conductive pastes that impart conductivity for fuel cell gas diffusion electrodes, and verifying their operating characteristics as fuel cells. It is therefore an object of the present invention to provide a substrate that, while using inexpensive glass fibers, can exhibit characteristics similar to those of a fuel cell comprising carbon fibers, and has excellent processing suitability as a substrate for a gas diffusion electrode, as well as a gas diffusion electrode employing it and a process for its production, and to thereby realize and provide an inexpensive fuel cell having excellent electric power generation properties.

In order to achieve this object, the first aspect of the invention provides a gas diffusion electrode substrate comprising a glass nonwoven fabric obtained by adhering a binder containing an acrylic resin and/or vinyl acetate resin to glass fibers.

In order to obtain a substrate according to the first aspect of the invention, the amount of the binder containing an acrylic resin, a vinyl acetate resin or a mixture of an acrylic resin and a vinyl acetate resin in the glass nonwoven fabric may be 3-30 (solid) mass% based on the total solid mass of the glass nonwoven fabric.

Also, the acrylic resin in the substrate according to the first aspect of the invention is preferably a self-crosslinking acrylic resin.

The second aspect of the invention provides a gas diffusion electrode obtained by adhering at least a conductive paste to a fiber-containing substrate and sintering it, wherein the substrate is composed of a glass nonwoven fabric obtained by adhering a binder containing an acrylic resin and/or vinyl acetate resin to glass fibers.

In the construction of the second aspect of the invention, the conductive paste is preferably a combination of carbon black and a polytetrafluoroethylene (PTFE) or a combination of carbon black and a polyvinylidene fluoride (PVDF).

According to a preferred mode of the second aspect of the invention, the apparent density of the gas diffusion electrode for the second aspect of the invention is 0.3-0.9 g/cm³.

Also, the acrylic resin in the gas diffusion electrode according to the second aspect of the invention is preferably a self-crosslinking acrylic resin.

The third aspect of the invention provides a production process for a gas diffusion electrode obtained by adhering at least a conductive paste to a fiber-containing substrate and sintering it, wherein the substrate is composed of a glass nonwoven fabric obtained by adhering a binder containing an acrylic resin and/or vinyl acetate resin to glass fibers, and the sintering of the conductive paste is carried out with hot pressing.

As a preferred mode of the third aspect of the invention, the conductive paste is preferably prepared by mixing at least carbon black and polyvinylidene fluoride with N-methylpyrrolidone as the solvent, and after adhering the conductive paste onto the substrate, exchanging the solvent with purified water and drying.

The acrylic resin in the gas diffusion electrode production process according to the third aspect of the invention is preferably a self-crosslinking acrylic resin.

The fourth aspect of the invention provides a fuel cell comprising a bipolar plate, an anode collector, a cathode collector and an electrolyte membrane sandwiched between the anode collector and cathode collector, wherein the anode collector and cathode collector each have a gas diffusion electrode and a catalyst layer, and at least the gas diffusion electrode of the cathode collector is obtained by adhering at least a conductive paste onto a substrate and sintering it, wherein the substrate is composed of a glass nonwoven fabric obtained by adhering a binder containing an acrylic resin and/or vinyl acetate resin to glass fibers.

In the construction of the fourth aspect of the invention, the conductive paste is preferably a combination of carbon black and a polytetrafluoroethylene (PTFE) or a combination of carbon black and a polyvinylidene fluoride (PVDF).

Also, the acrylic resin in the fuel cell according to the fourth aspect of the invention is preferably a self-crosslinking acrylic resin.

When the construction of the gas diffusion electrode substrate according to the first aspect of the invention is employed, even when using inexpensive glass fibers, adhering of the binder containing an acrylic resin and/or vinyl acetate resin allows it to function as a satisfactory base layer for adhering and sintering with excellent chemical resistance against organic substances such as alcohols used as solvents during adhesion of conductive paste. Moreover, the strength and processing suitability are superior to substrates composed of carbon fibers. It is therefore possible to achieve excellent fuel cell characteristics.

In addition, employing the construction of a gas diffusion electrode according to the second aspect of the invention can provide satisfactory electrical connection and gas diffusion with the adjacent components of the fuel cell such as catalyst layers.

Also, by employing the gas diffusion electrode production process according to the third aspect of the invention, the aforementioned production technique may be applied to specific substrates to realize an excellent gas diffusion electrode according to the second aspect of the invention.

The construction of a fuel cell according to the fourth aspect of the invention can thus realize excellent cell characteristics even when utilizing an inexpensive substrate.

### BRIEF DESCRIPTION OF THE DRAWINGS

Fig. 1 is a schematic cross-sectional view of the overall structure of a polymer electrolyte fuel cell.

### DESCRIPTION OF THE PREFERRED EMBODIMENTS

Preferred embodiments of the aspects of the invention will now be explained with reference to Fig. 1. Throughout the following explanation, specific forms, configurations and numerical conditions will be mentioned for a better understanding of the invention, but it is to be understood that the invention is not limited to these illustrative instances and that any desired alterations and modifications may be made to the design such as are within the scope of the invention.

A preferred embodiment of a gas diffusion electrode substrate according to the first aspect of the invention will be explained first. The substrate serves as the base layer for adhering and sintering of the conductive paste described hereunder, and in the construction of the fuel cell illustrated in Fig. 1, it is the component forming each of the gas diffusion electrodes 13a, 13c. The gas diffusion electrodes 13a, 13c are integrally formed with the catalyst layers 15a, 15c on which the catalyst paste described hereunder is adhered.

The substrate comprises a glass nonwoven fabric obtained by adhering a binder containing an acrylic resin and/or vinyl acetate resin to glass fibers. The binder may also contain a resin other than an acrylic resin or vinyl acetate resin, but preferably it consists of an acrylic resin alone, a vinyl acetate resin alone or a mixture of two such resins.

A known technique may be employed for preparation of the nonwoven fabric, but preparation by the most common wet-laid method is preferred. The fiber diameter and fiber length of the glass fiber are preferably in the commonly known range of 4-20 µm fiber diameter and 5-25 mm fiber length, in order to ensure satisfactory dispersibility at web forming step and nonwoven fabric strength. The glass fiber component is preferably E glass, C glass or Q glass to ensure chemical resistance (especially acid resistance), and any of these may be selected.

The sheeted glass fiber is adhered with the binder containing an acrylic resin, vinyl acetate resin or a mixture of two such resins, as the gist of the first aspect of the invention, and these binder resins are known industrially as resins with low chlorine or metal ion impurities. The impurities have adverse effects such as causing corrosion in the fuel cell, and therefore the binder used for the invention most preferably has a chlorine content of no greater than 20 ppm.

When an acrylic resin is used as the resin composing the binder, it is preferred to use a self-crosslinking acrylic resin. Since protons are generated by reaction in the catalyst layer of a fuel cell, resulting in exposure to a strong acidic (about pH 2) condition around the gas diffusion electrode as well, the gas diffusion electrode must have high acid resistance. Furthermore, acrylic resins that have been hardened by self-crosslinking exhibit excellent acid resistance and are therefore highly suitable as structural materials for gas diffusion electrode substrates.

The term "self-crosslinking acrylic resin" referred to here means an acrylic resin having one or more crosslinkable functional groups in the same or different monomer units. The combination of crosslinkable functional groups may be, for example, a combination of carboxylic acid groups and vinyl groups, a combination of carboxylic acid groups and glycidyl groups, a combination of carboxylic acid groups and amine groups, a combination of carboxylic acid groups and amide groups, a combination of carboxylic acid groups and methylol groups or a combination of carboxylic acid groups and epoxy groups. Preferred among the above are combinations of carboxylic acid groups and vinyl groups, combinations of carboxylic acid groups and glycidyl groups, combinations of carboxylic acid groups and methylol groups and combinations of carboxylic acid groups and epoxy groups, because they contain no nitrogen and have particularly excellent oxidation resistance.

The solid amount of the binder in the glass nonwoven fabric used for the invention is preferably in the range of 3-30 mass% based on the total solid mass of the glass nonwoven fabric. If the solid amount is below this preferred range at under 3 mass%, the strength of the glass nonwoven fabric substrate will be reduced and the operating suitability will tend to be significantly impaired. If the solid amount exceeds 30 mass%, the coating formed from the binder will be excessive and the pores in the nonwoven fabric structure will be too small, tending to result in a non-uniform coated state of the conductive paste during preparation of the gas diffusion electrode.

A preferred mode of a gas diffusion electrode according to the second aspect of the invention will now be explained. In the electrode of the invention as well, as in the prior art, it is necessary for the conductive paste to be adhered and sintered on the substrate in such a manner that conductivity is imparted in the direction of thickness (the right-left direction on the page plane of Fig. 1), and that the air permeability is sufficient to ensure supply and remove of fuel gas and internally generated moisture. The conductive paste applied for this purpose may be a known material, and for example, the combination of carbon black and polytetrafluoroethylene (PTFE) or the combination of carbon black and polyvinylidene fluoride (PVDF) disclosed in Patent document 1 or Patent document 2 may be used. The apparent density of the gas diffusion electrode obtained after adhering and sintering the conductive paste on the substrate is preferably 0.3-0.9 g/cm³. An apparent density higher than the upper limit of this preferred range will tend to impede supply of the gas. If the apparent density is below the lower limit, the apparent density when assembled in a cell will vary excessively, closing the gas channel (not shown) formed in the bipolar plate of Fig. 1 and tending to hamper effective supply of gas. Moreover, a low apparent density can result in high volume resistance. A known technique may be applied for adhering and sintering of the conductive paste, but the method according to the third aspect of the invention described hereunder is most preferred.

In the gas diffusion electrode production process according to the third aspect of the invention, the apparent density is adjusted by hot pressing and, when the PVDF particles mentioned above are used in the conductive paste, a conductive paste comprising the PVDF particles and carbon black is prepared with N-methylpyrrolidone as the solvent and is coated onto the substrate, after which water-solvent exchange is performed. After water-solvent exchange, the conductive paste is sintered with hot pressing. The hot pressing and water-solvent exchange techniques used in this process may each be well-known techniques, but using a glass nonwoven fabric as the gas diffusion electrode substrate according to the first aspect of the invention will provide high structural strength compared to carbon paper, and will therefore allow formation of electrodes with high reproducibility of apparent density, which affects the gas permeability.

There are no particular restrictions on the hot pressing conditions, but a temperature of 50-200°C and a pressure of 2-8 MPa for 10-60 seconds is preferred.

For fabrication of a gas diffusion electrode according to the second aspect of the invention, the adhering and sintering of the conductive paste on the substrate may be carried out a method other than the method according to the third aspect of the invention described above. As an example of another method there may be mentioned a method of mixing carbon black and PTFE and preparing a conductive paste using a water/ethanol mixture as the solvent, and then coating this onto the substrate, and drying and sintering it. The sintering conditions are not particularly restricted, but preferably a heating furnace is used for 0.1-2 hours at a temperature of 300-360°C. The sintering is preferably carried out in a nitrogen atmosphere.

The basic construction of a fuel cell using the first to third aspects of the invention may be one wherein the gas diffusion electrode described above is situated at the anode or cathode, or both, of the fuel cell, but a preferred mode of the fuel cell according to the fourth aspect of the invention is a fuel cell provided with a bipolar plate, an anode collector with gas diffusion electrode and catalyst layer and a cathode collector with a gas diffusion electrode and catalyst layer, as well as an electrolyte membrane sandwiched between the anode collector and cathode collector, wherein the gas diffusion electrode of the cathode collector is most preferably a gas diffusion electrode according to the second aspect of the invention.

### [Examples]

Examples of the different aspects of the invention will now be explained. First, the examples will be described with detailed explanations of the construction of the substrate, binder and conductive paste, and of gas diffusion electrode materials obtained with various conductive paste adhering and sintering methods.

### (Examples 1-2 and Comparative Examples 1-3)

First, a glass nonwoven fabric and the carbon paper "TGP-H-060" (trade name of Toray Co., Ltd.) were prepared as fiber sheets for use as the gas diffusion electrode substrates. The glass nonwoven fabric was prepared by sheeting 9 µm fiber diameter × 13 mm fiber length E glass by an ordinary process, and was impregnated with a binder composed mainly of an acrylic resin (DICFINE IV-3600, trade name of Dainippon Ink and Chemicals, Inc.) and a polyvinyl acetate binder (IODOSOL LD4347, trade name of Nippon NSC, Ltd.) mixed in a solid mass ratio of 1:1, and then dried to obtain a gas diffusion electrode substrate with a binder amount at a solid content of 15 mass%, a surface density of 25 g/m² and an apparent density of 0.13 g/cm³. This procedure was also used for impregnation of similarly sheeted glass fibers with an ordinary urea resin (PLYSET P364B, trade name of Dainippon Ink and Chemicals, Inc.) or epoxy resin (EPICLON 840, trade name of Dainippon Ink and Chemicals, Inc.), as a conventional glass nonwoven fabric binder instead of the aforementioned acrylic resin/vinyl acetate resin binder, after which drying produced gas diffusion electrode substrates with the same solid content, final surface density and apparent density as above.

Next, two different conductive pastes were prepared for these substrate structures, and after adhered film formation onto the substrates by a known coating technique, they were sintered by one of two techniques, either sintering in a nitrogen atmosphere as is common in the prior art or sintering with hot pressing, to prepare five different gas diffusion electrodes as evaluation samples.

Specifically, carbon black (DENKA BLACK particles, trade name of Denka Co., Ltd.) and PTFE "RUBLON L-5" (trade name of Daikin Industries, Ltd.) were mixed in a mass ratio of 6:4 and crushed with a mortar, and then thoroughly stirred and dispersed in a water/ethanol mixed solvent (volume ratio: 2:3) to obtain a conductive paste with a solid content of 10 mass% ("first conductive paste"). Next, the first conductive paste was coated to impart conductivity through the entire thickness of the substrate, and was dried with a hot air drier at 60°C. It was then sintered in a heating furnace at 350°C for 1 hour in a nitrogen atmosphere to prepare a gas diffusion electrode.

A gas diffusion electrode was also prepared with the same conditions as when using the first conductive paste described above, except that the carbon black and a PVDF (KF polymer, trade name of Kureha Corp.) were mixed in a mass ratio of 6:4 and N-methylpyrrolidone was used as the solvent to prepare a conductive paste with a solid content of 10 mass% ("second conductive paste"), and the technique of the third aspect of the invention was utilized for coating and drying of the second conductive paste onto a substrate, which was then immersed in purified water for 10 minutes for water-solvent exchange and dried with a hot air drier at 60°C, after which sintering was performed with hot pressing under conditions of 6 MPa, 170°C, 30 seconds.

The coverage of the first and second conductive pastes as solid content after adhering and sintering was 75 g/m² for all of the samples.

Table 1 shows the material compositions of the gas diffusion electrodes and the film forming treatments, sintering conditions and apparent densities of the final gas diffusion electrodes prepared under these conditions. In the table, glass nonwoven fabric as an essential component of the substrate is indicated as "Glass" under "Fibers" in the Materials column, while carbon paper control is indicated as "carbon". Under "Conductive paste" in the Materials column, carbon black is indicated as "CB", while "EtOH" represents ethanol in the Solvent column. The apparent density of each gas diffusion electrode was calculated from measurement using a dial gauge (thickness under 25 kPa compressive load). Under the "sintering conditions" column, the temperature and time are listed in that order from the top, with the last row indicating the atmosphere used in the heating furnace or the pressure conditions if hot pressing with a flat press was employed.

**[Table 1]**

| | Materials | | | | Film-forming treatment | Sintering conditions | Apparent density of gas diffusion electrode (g/cm³) |
|---|---|---|---|---|---|---|---|
| | Fiber | Binder | Conductive paste | | | | |
| | | | Particle component | Solvent | | | |
| Ex. 1 | Glass | Acryl-vinyl acetate | CB, PTFE | Water, EtOH | 60°C drying | 350°C, 1 hour, nitrogen | 0.4 |
| Ex. 2 | Glass | Acryl-vinyl acetate | CB, PVDF | N-methyl pyrrolidone | Water/sol vent exchange ↓ 60°C drying | 170°C, 30 seconds, 6 MPa | 0.8 |
| Comp. Ex. 1 | Glass | Urea resin | CB, PTFE | Water, EtOH | 60°C drying | 350°C, 1 hour, Nitrogen | 0.4 |
| Comp. Ex. 2 | Glass | Epoxy resin | CB, PTFE | Water, EtOH | 60°C drying | 350°C, 1 hour, Nitrogen | 0.4 |
| Comp. Ex. 3 | Carbon | None | CB, PTFE | Water, EtOH | 60°C drying | 350°C, 1 hour, Nitrogen | 0.6 |

### (Example 3)

A glass nonwoven fabric was prepared by sheeting 9 µm fiber diameter × 13 mm fiber length E glass by an ordinary process, and was impregnated with a self-crosslinking acrylic resin emulsion (self-crosslinking with carboxylic acid and hydroxyl groups, DICFINE IV-3600, trade name of Dainippon Ink and Chemicals, Inc.) as a binder and then dried to obtain a gas diffusion electrode substrate with binder amount at a solid content of 15 mass%, a surface density of 25 g/m² and an apparent density of 0.13 g/cm³.

The substrate was coated with the second conductive paste and dried, and after water-solvent exchange and drying, it was sintered with hot pressing to prepare a gas diffusion electrode under the same conditions as in Example 2. The coverage of the second conductive paste as solid content after adhering and sintering was 75 g/m².

### (Comparative Example 4)

A glass nonwoven fabric was prepared by sheeting a slurry comprising a mixture of 9 µm fiber diameter × 13 mm fiber length E glass and PVA fibers as a binder (SOLBRON, trade name of Nitivy Co., Ltd., 3.3 dtex × 2 mm) by an ordinary process, and was dried to obtain a gas diffusion electrode substrate with binder amount at a solid content of 10 mass%, a surface density of 25 g/m² and an apparent density of 0.13 g/cm³.

The substrate was coated with the second conductive paste and dried, and after water-solvent exchange and drying, it was sintered with hot pressing to prepare a gas diffusion electrode under the same conditions as in Example 2. The coverage of the second conductive paste as solid content after adhering and sintering was 75 g/m².

Table 2 shows the material compositions of the gas diffusion electrodes of Example 3 and Comparative Example 4 and the film forming treatments, sintering conditions and apparent densities of the final gas diffusion electrodes prepared under these conditions. In the table, "Acryl" indicates the self-crosslinking acrylic resin emulsion, and "PVA" indicates the PVA fibers.

**[Table 2]**

| | Materials | | | | Film-forming treatment | Sintering conditions | Apparent density of gas diffusion electrode (g/cm³) |
|---|---|---|---|---|---|---|---|
| | Fiber | Binder | Conductive paste | | | | |
| | | | Particle component | Solvent | | | |
| Ex. 3 | Glass | Acryl | CB, PVDF | N-methyl pyrrolidone | Water-solvent exchange ↓ 60°C drying | 170°C, 30 seconds, 6 MPa | 0.8 |
| Comp. Ex. 4 | Glass | PVA | CB, PVDF | N-methyl pyrrolidone | Water-solvent exchange ↓ 60°C drying | 170°C, 30 seconds, 6 MPa | 0.4 |

The procedure for evaluating samples of the prepared gas diffusion electrodes will now be explained. First, for construction of a fuel cell incorporating each electrode sample, the electrolyte membrane 19 and catalyst layers 15a, 15c shown in Fig. 1 were fabricated as components.

### <Fabrication of catalyst layers>

First, a known method was used to add 0.8 g of platinum-supporting carbon particles (product of Ishifuku Metal Industry Co., Ltd., platinum loading weight: 40 mass% with respect to carbon) to 9.6 g of ethyleneglycol dimethyl ether to form a catalyst paste, and after dispersing by ultrasonic treatment, 4.0 g of 5 mass% Nafion solution (trade name of U.S. DuPont) was added and dispersed by ultrasonic treatment was continued. The catalyst paste was coated onto the support "Naflon PTFE tape" (product of Nichias Corp., 0.1 mm thickness), and a hot air drier was used for drying at 60°C to obtain a catalyst layer having a platinum loading weight of 0.5 mg/cm² on the support.

### <Fabrication of electrolyte membrane and catalyst layer bonded structure>

For a characteristic comparison test of the gas diffusion electrode for the evaluation test in this example, the catalyst layer was used to fabricate an electrolyte membrane-catalyst layer bonded structure by the following method. The electrolyte membrane used was "Nafion 117" (trade name of U.S. DuPont), and both sides of the membrane were laminated with the catalyst layer and subjected to hot pressing at 135°C, 2 minutes, 6 MPa to form a bonded structure.

### <Evaluation of electric power generation by fuel cell>

Each of the aforementioned members and the gas diffusion electrode samples shown in Table 1-2 were combined to form MEAs, and were assembled into standard polymer electrolyte fuel cell "EX-1" (trade name of FC Development Co., Ltd.) to examine the electric power generation characteristics. The standard cell is used for evaluation testing of an MEA with a structure comprising bipolar plates 11a, 11b as shown in Fig. 1, and electric power generation was accomplished by incorporation into the MEA with a clamp pressure of 3.0N·m, and supplying hydrogen gas to the anode and oxygen gas to the cathode each at a flow rate of 300 mL/min. The cell temperature was 80°C, and saturated water vapor at a temperature of 70°C was supplied for humidification of the anode and cathode to generate electric power. An electric power evaluating device by FC Development Co., Ltd. was used for measurement of the cell voltage at current densities of 0.4 A/cm² and 1.0 A/cm². The structure of each MEA and the evaluated cell voltages are shown in Table 3. The numerical values of the cell voltages in parentheses are the proportions of the cell voltages at 0.4 A/cm² based on "100".

**[Table 3]**

| | MEA structure | | Cell voltage at each current density [V] | |
|---|---|---|---|---|
| | Anode | Cathode | 0.4 | 1.0 |
| | | | [A/cm²] | [A/cm²] |
| Example A | Example 1 | Example 1 | 0.62 | 0.36 |
| | | | (100) | (58) |
| Example B | Example 2 | Example 2 | 0.65 | 0.38 |
| | | | (100) | (59) |
| Example C | Comp. Ex. 3 | Example 2 | 0.68 | 0.45 |
| | | | (100) | (66) |
| Example D | Example 3 | Example 3 | 0.67 | 0.40 |
| | | | (100) | (60) |
| Comp. Example A | Comp. Ex. 1 | Comp. Ex. 1 | 0.55 | 0.11 |
| | | | (100) | (20) |
| Comp. Example B | Comp. Ex. 2 | Comp. Ex. 2 | 0.59 | 0.27 |
| | | | (100) | (46) |
| Comp. Example C | Comp. Ex. 3 | Comp. Ex. 3 | 0.57 | 0.28 |
| | | | (100) | (49) |
| Comp. Example D | Comp. Ex. 4 | Comp. Ex. 4 | 0.45 | 0.10 |
| | | | (100) | (22) |

As seen in Table 3, the four cells (Example A which employed the gas diffusion electrode of Example 1 for both the anode and cathode, Example B which employed the gas diffusion electrode of Example 2 for both the anode and cathode, Example C which combined Example 2 with Comparative Example 3 that utilized ordinary carbon paper, and Example D which employed the gas diffusion electrode of Example 3 for both the anode and cathode) exhibited less cell voltage reduction with high current density, compared to Comparative Example A using Comparative Example 1 with a urea resin as the binder of the glass nonwoven fabric, Comparative Example B using Comparative Example 2 with an epoxy resin as the binder and Comparative Example D using Comparative Example 4 using PVA fibers as the binder. This confirmed that selection of the binder used in the substrate of the gas diffusion electrode can yield superior electric power generation characteristics.

Also, comparison of Comparative Example C that employed the substrate of Comparative Example 3 utilizing ordinary carbon paper and Example C that employed Example 2 for the gas diffusion electrode on the cathode, shows that the construction of the fourth aspect of the invention, i.e. application of an electrode according to the second aspect of the invention for at least the cathode, produces superior electric power generation characteristics.

## Claims

1. A fuel cell gas diffusion electrode substrate comprising a glass nonwoven fabric obtained by adhering a binder containing an acrylic resin and/or vinyl acetate resin to glass fibers.

2. The fuel cell gas diffusion electrode substrate according to claim 1, wherein the amount of the binder containing the acrylic resin and/or vinyl acetate resin in the glass nonwoven fabric is 3-30 mass% based on the total solid mass of the glass nonwoven fabric.

3. The fuel cell gas diffusion electrode substrate according to claim 1 or 2, wherein the acrylic resin is a self crosslinking acrylic resin.

4. A fuel cell gas diffusion electrode obtained by a process, wherein conductivity is imparted in the direction of thickness by adhering at least a conductive paste to a fiber-containing substrate according to claim 1 and sintering it,
wherein the substrate is composed of a glass nonwoven fabric obtained by adhering a binder containing an acrylic resin and/or vinyl acetate resin to glass fibers.

5. The fuel cell gas diffusion electrode according to claim 4, wherein the conductive paste contains carbon black and a polytetrafluoroethylene or polyvinylidene fluoride.

6. The fuel cell gas diffusion electrode according to claim 4 or 5, wherein the apparent density of the gas diffusion electrode is 0.3-0.9 g/cm³.

7. The fuel cell gas diffusion electrode according to any one of claims 4 to 6,
wherein the acrylic resin is a self-crosslinking acrylic resin.

8. A production process for a fuel cell gas diffusion electrode, wherein conductivity is imparted in the direction of thickness obtained by adhering at least a conductive paste to a fiber-containing substrate and sintering it,
wherein the substrate is composed of a glass nonwoven fabric obtained by adhering a binder containing an acrylic resin and/or vinyl acetate resin to glass fibers, and
the sintering of the conductive paste is carried out by hot pressing.

9. The production process for a fuel cell gas diffusion electrode according to claim 8,
wherein the conductive paste is prepared by mixing at least carbon black and a polyvinyledene fluoride with N-methylpyrrolidone as the solvent, and
after adhering the conductive paste onto the substrate, exchanging the solvent with purified water and drying.

10. The production process for a fuel cell gas diffusion electrode according to claim 8 or 9, wherein the acrylic resin is a self-crosslinking acrylic resin.

11. A fuel cell comprising a bipolar plate, an anode collector, a cathode collector and an electrolyte membrane sandwiched between the anode collector and cathode collector,
wherein the anode collector and cathode collector each have a fuel cell gas diffusion electrode and a catalyst layer, and wherein
at least the fuel cell gas diffusion electrode of the cathode collector is a fuel cell gas diffusion electrode according to claim 4.

12. The fuel cell according to claim 11, wherein the conductive paste contains carbon black and a polytetrafluoroethylene or polyvinylidene fluoride.

13. The fuel cell according to claim 11 or 12, wherein the acrylic resin is a self-crosslinking acrylic resin.

## Patentansprüche

1. Gasdiffusionselektrodensubstrat für eine Brennstoffzelle, umfassend einen Glasfaserfliessstoff, der durch Anhaften eines Binders, der ein Acrylharz und/oder Vinylacetatharz enthält, an Glasfasern erhalten wird.

2. Das Gasdiffusionselektrodensubstrat für eine Brennstoffzelle gemäß Anspruch 1, wobei die Menge des Binders, der das Acrylharz und/oder Vinylacetatharz enthält, im Glasfaserfliessstoff 3 - 30 Massen% beträgt, basierend auf der Gesamtfeststoffmenge des Glasfaserfliessstoffs.

3. Das Gasdiffusionselektrodensubstrat für eine Brennstoffzelle gemäß Anspruch 1 oder 2, wobei das Acrylharz ein selbstvernetzendes Acrylharz ist.

4. Gasdiffusionselektrode für eine Brennstoffzelle, erhalten durch ein Verfahren, bei dem Leitfähigkeit in Richtung der Dicke durch Anhaften mindestens einer leitfähigen Paste an ein Faser enthaltendes Substrat gemäß Anspruch 1, und Sintern, verliehen wird,
wobei das Substrat aus einem Glasfaserfliessstoff zusammengesetzt ist, der durch Anhaften eines Binders, der ein Acrylharz und/oder Vinylacetatharz enthält, an Glasfasern erhalten wird.

5. Die Gasdiffusionselektrode für eine Brennstoffzelle gemäß Anspruch 4, wobei die leitfähige Paste Ruß und ein Polytetrafluorethylen oder Polyvinylidenfluorid enthält.

6. Die Gasdiffusionselektrode für eine Brennstoffzelle gemäß Anspruch 4 oder 5, wobei die Schüttdichte der Gasdiffusionselektrode 0,3 - 0,9 g/cm³ beträgt.

7. Die Gasdiffusionselektrode für eine Brennstoffzelle gemäß einem der Ansprüche 4 bis 6, wobei das Acrylharz ein selbstvernetzendes Acrylharz ist.

8. Herstellungsverfahren für eine Gasdiffusionselektrode für eine Brennstoffzelle, bei dem Leitfähigkeit in Richtung der Dicke durch Anhaften mindestens einer leitfähigen Paste an ein Faser enthaltendes Substrat, und Sintern, verliehen wird,
wobei das Substrat aus einem Glasfaserfliessstoff zusammengesetzt ist, der durch Anhaften eines Binders, der ein Acrylharz und/oder Vinylacetatharz enthält, an Glasfasern erhalten wird, und
wobei das Sintern der leitfähigen Paste mittels Heißpressen durchgeführt wird.

9. Das Herstellungsverfahren für eine Gasdiffusionselektrode für eine Brennstoffzelle gemäß Anspruch 8,
wobei die leitfähige Paste durch Mischen von mindestens Ruß und einem Polyvinylidenfluorid mit N-Methylpyrrolidon als das Lösungsmittel hergestellt wird, und,
nach Anhaften der leitfähigen Paste auf dem Substrat, Austauschen des Lösungsmittels mit gereinigtem Wasser und Trocknen.

10. Das Herstellungsverfahren für eine Gasdiffusionselektrode für eine Brennstoffzelle gemäß Anspruch 8 oder 9, wobei das Acrylharz ein selbstvernetzendes Acrylharz ist.

11. Brennstoffzelle, umfassend eine bipolare Platte, einen Anodenkollektor, einen Kathodenkollektor und eine Elektrolytmembran, die zwischen dem Anodenkollektor und dem Kathodenkollektor liegt,
wobei der Anodenkollektor und der Kathodenkollektor jeweils eine Gasdiffusionselektrode für eine Brennstoffzelle und eine Katalysatorschicht besitzen, und wobei
mindestens die Gasdiffusionselektrode für eine Brennstoffzelle des Kathodenkollektors eine Gasdiffusionselektrode für eine Brennstoffzelle gemäß Anspruch 4 ist.

12. Die Brennstoffzelle gemäß Anspruch 11, wobei die leitfähige Paste Ruß und ein Polytetrafluorethylen oder Polyvinylidenfluorid enthält.

13. Die Brennstoffzelle gemäß Anspruch 11 oder 12, wobei das Acrylharz ein selbstvernetzendes Acrylharz ist.

## Revendications

1. Substrat d'électrode de diffusion de gaz de pile à combustible comprenant un verre non tissé obtenu par collage d'un liant contenant une résine acrylique et/ou une résine d'acétate de vinyle à des fibres de verre.

2. Substrat d'électrode de diffusion de gaz de pile à combustible selon la revendication 1, dans lequel la quantité de liant contenant la résine acrylique et/ou la résine d'acétate de vinyle dans le verre non tissé représente 3 à 30 % en masse de la masse solide totale du verre non tissé.

3. Substrat d'électrode de diffusion de gaz de pile à combustible selon la revendication 1 ou 2, dans lequel la résine acrylique est une résine acrylique d'autoréticulation.

4. Electrode de diffusion de gaz de pile à combustible obtenu par un procédé, dans laquelle la conductivité est communiquée dans la direction de l'épaisseur par collage d'au moins une pâte conductrice à un substrat chargé de fibres selon la revendication 1 et en la frittant,
dans laquelle le substrat est composé d'un verre non tissé obtenu par collage d'un liant contenant une résine acrylique et/ou une résine d'acétate de vinyle à des fibres de verre.

5. Electrode de diffusion de gaz de pile à combustible selon la revendication 4, dans laquelle la pâte conductrice contient du noir de charbon et un polytetrafluoroéthylène ou un fluorure de polyvinylidène.

6. Electrode de diffusion de gaz de pile à combustible selon la revendication 4 ou 5, dans laquelle la densité apparente de l'électrode de diffusion de gaz est comprise entre 0.3 et 0.9 g/cm³.

7. Electrode de diffusion de gaz de pile à combustible selon l'une quelconque des revendications 4 à 6, dans laquelle la résine acrylique est une résine acrylique d'autoréticulation.

8. Procédé de production d'une électrode de diffusion de gaz de pile à combustible, dans lequel la conductivité est communiquée dans la direction de l'épaisseur obtenue par collage d'au moins une pâte conductrice à un substrat chargé de fibres et en la frittant,
dans lequel le substrat est composé d'un verre non tissé obtenu par collage d'un liant contenant une résine acrylique et/ou une résine d'acétate de vinyle à des fibres de verre, et
le frittage de la pâte conductrice est réalisé par pression à chaud.

9. Procédé de production d'une électrode de diffusion de gaz de pile à combustible selon la revendication 8, dans lequel la pâte conductrice est préparée en mélangeant au moins du noir de charbon et un fluorure de polyvinylidène avec N-méthylpyrrolidone comme solvant, et
après collage de la pâte conductrice sur le substrat, échanger le solvant avec de l'eau purifiée et sécher.

10. Procédé de production d'une électrode de diffusion de gaz de pile à combustible selon la revendication 8 ou 9, dans lequel la résine acrylique est une résine acrylique d'autoréticulation.

11. Pile à combustible comprenant une plaque bipolaire, un collecteur d'anode, un collecteur de cathode, et une membrane électrolyte coincée entre le collecteur d'anode et le collecteur de cathode,
dans laquelle le collecteur d'anode et le collecteur de cathode ont chacun une électrode de diffusion de gaz de pile à combustible et une couche de catalyseur, et dans laquelle
au moins l'électrode de diffusion de gaz de pile à combustible du collecteur de cathode est une électrode de diffusion de gaz de pile à combustible selon la revendication 4.

12. Pile à combustible selon la revendication 11, dans laquelle la pâte conductrice contient du noir de charbon et un polytetrafluoroéthylène ou un fluorure de polyvinylidène.

13. Pile à combustible selon la revendication 11 ou 12, dans laquelle la résine acrylique est une résine acrylique d'autoréticulation.
